# EUROPEAN PATENT APPLICATION

(11) **EP 4 794 034 A1**
(43) Date of publication of application: **19.08.2026**
(21) Application number: 25211307.1
(22) Date of filing: 27.10.2025
(51) Int. Cl.: H01M 4/66, H01M 10/0585, H01M 50/109, H01M 50/186, H01M 50/534

(54) **ELECTRODE ASSEMBLY AND SECONDARY BATTERY INCLUDING THE SAME**

(30) Priority: 13.02.2025 KR 20250018642
(71) Applicant: SAMSUNG SDI CO., LTD., Yongin-si, Gyeonggi-do 17084 (KR)
(72) Inventor: JANG, Taewoong, Yongin-Si, Gyeonggi-do 17084 (KR)
(74) Representative: Gulde & Partner

(57) **Abstract**

An electrode assembly (100) includes first and second electrodes (110, 120), and a separator (130), the first electrode (110) including a first substrate (S1) including a first active material layer (AM1) and a first non-coated part (NC1), a second substrate (S2) including a first active material layer (AM1) and a second non-coated part (NC2), a first central substrate (CS1) between the other surface of the first substrate (S1) and the other surface of the second substrate (S2), and a first substrate tab (ST1) extending from one end of the first central substrate (CS1), wherein the second electrode (120) includes a third substrate (S3) including a second active material layer (AM2) and a third non-coated part (NC3), a fourth substrate (S4) including a second active material layer (AM2) and a fourth non-coated part (NC4), a second central substrate (CS2) between a portion of the other surface of the third substrate (S3) and the fourth substrate (S4), and a second substrate tab (ST2) extending from one end of the second central substrate (CS2).

## Description

### BACKGROUND

### 1. Field

Aspects of some embodiments of the present disclosure relate to an electrode assembly and a secondary battery including the same.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

With the rising consumer demand for wearable devices including headphones, earphones, smartwatches, and body-worn medical devices that use wireless communication such as Bluetooth^{®}, the desire for ultra-small batteries mounted in wearable devices is also on the rise.

Significant electrode plate loss during the manufacturing process of ultra-small and stacked secondary batteries may lower yield and price competitiveness. As a result, there may be a desire for improved manufacturing techniques that minimize or reduce electrode plate loss.

The above information disclosed in this Background section is for enhancement of understanding of the background of the present disclosure, and therefore, it may contain information that does not constitute related (or prior) art.

### SUMMARY

Aspects of some embodiments of the present disclosure include an electrode assembly and a secondary battery including the same.

These and other aspects and features of the present disclosure will be described in or will be apparent from the following description of embodiments of the present disclosure.

According to some embodiments of the present disclosure, an electrode assembly includes a first electrode, a second electrode, and a separator, wherein the first electrode includes a first substrate including a first active material layer on one surface and a first non-coated part on the other (e.g. opposing) surface, a second substrate including a first active material layer on one surface and a second non-coated part on the other (e.g. opposing) surface, a first central substrate between a portion of the first non-coated part on the other surface of the first substrate and a portion of the second non-coated part on the other surface of the second substrate, and a first substrate tab extending from one end of the first central substrate, and wherein the second electrode includes a third substrate including a second active material layer on one surface and a third non-coated part on the other (e.g. opposing) surface, a fourth substrate including a second active material layer on one surface and a fourth non-coated part on the other (e.g. opposing) surface, a second central substrate between a portion of the third non-coated part on the other surface of the third substrate and a portion of the fourth non-coated part on the other surface of the fourth substrate, and a second substrate tab extending from one end of the second central substrate.

According to some embodiments, at least one of the first substrate tab and the second substrate tab further may include an insulating part coated with a film of an insulating material. In other words, at least one (e.g. both) of the first substrate tab and the second substrate tab further comprises an insulating part comprising a film consisting of an insulating material, and the film being coated on the first substrate tab and/or the second substrate tab, respectively.

According to some embodiments, a first direction where the first substrate tab extends from one end of the first central substrate and a second direction where the second substrate tab extends from one end of the second central substrate may be different from each other.

According to some embodiments, the electrode assembly may be a stacked electrode assembly, wherein the separator is between a first active material layer of the first electrode and a second active material layer of the second electrode.

According to some embodiments, each of the first central substrate and the second central substrate may be arranged to allow a line extending in a stacking direction of the stacked electrode assembly from the other end of the first central substrate, and a line extending in the stacking direction from the other end of the second central substrate to be spaced apart from each other by a predetermined distance.

According to some embodiments, each of the first substrate, the second substrate, the third substrate, and the fourth substrate may have a circular shape.

According to some embodiments, each of the first central substrate and the second central substrate may have one flat end (e.g. side) and the other (e.g. opposing) flat end (e.g. side), and a longitudinal axis length of one end (e.g. side) may be greater than a longitudinal axis length of the other end (e.g. side).

According to some embodiments, each of the first substrate tab and the second substrate tab may extend from the other side of each of the first central substrate and the second central substrate. In other words, the first substrate tab extends from the other (shorter) flat end of the first central substrate; and the second substrate tab extends from the other (shorter) flat end of the second central substrate.

According to some embodiments, the first central substrate and the second central substrate do not overlap. Particularly, the first central substrate and the second central substrate do not overlap in the stacking direction of the electrode assembly.

According to some embodiments, the first central substrate and the second central substrate each have a (essentially) half-circular shape. Particularly, the first central substrate and the second central substrate have a (essentially) half-circular shape with one flat end and an other flat end opposing the one flat end and being shorter, wherein the first substrate tab and the second substrate tab extend from the shorter flat end.

According to some embodiments of the present disclosure, a secondary battery, includes an electrode assembly including a first electrode, a separator, and a second electrode, a case configured to accommodate the electrode assembly, including an opening with one open side, and electrically connected to the first electrode, and a cap assembly configured to seal the opening by coupling to the one open side of the case, and electrically connected to the second electrode, wherein the first electrode includes a first substrate including a first active material layer on one surface and a first non-coated part on the other surface, a second substrate including a first active material layer on one surface and a second non-coated part on the other surface, a first central substrate between a portion of the other surface of the first substrate and a portion of the other surface of the second substrate, and a first substrate tab extending from one end of the first central substrate, and wherein the second electrode may include a third substrate including a second active material layer on one surface and a third non-coated part on the other surface, a fourth substrate including a second active material layer on one surface and a fourth non-coated part on the other surface, a second central substrate between a portion of the other surface of the third substrate and a portion of the other surface of the fourth substrate, and a second substrate tab extending from one end of the second central substrate.

According to some embodiments, the first substrate tab and/or the second substrate tab may further include an insulating part coated with a film of an insulating material. In other words, at least one (e.g. both) of the first substrate tab and the second substrate tab further comprises an insulating part comprising a film consisting of an insulating material, and the film being coated on the first substrate tab and/or the second substrate tab, respectively.

According to some embodiments, a first direction in which the first substrate tab extends from one end of the first central substrate and a second direction in which the second substrate tab extends from one end of the second central substrate may be different from each other.

According to some embodiments, the electrode assembly may be a stacked electrode assembly, and the separator may be between a first active material layer of the first electrode and a second active material layer of the second electrode.

According to some embodiments, each of the first central substrate and the second central substrate may be arranged to allow a line extending in a stacking direction of the stacked electrode assembly from the other end of the first central substrate, and a line extending in the stacking direction from the other end of the second central substrate are spaced apart from each other by a predetermined distance.

According to some embodiments, each of the first substrate, the second substrate, the third substrate, and the fourth substrate may have a circular shape.

According to some embodiments, each of the first central substrate and the second central substrate may have one flat side and the other flat side, wherein a longitudinal axis length of one side is greater than a longitudinal axis length of the other side.

According to some embodiments, each of the first substrate tab and the second substrate tab may extend from the other side of each of the first central substrate and the second central substrate.

According to some embodiments, the first electrode may be connected to a first lead tab, and a sealing member may be placed between the electrode assembly and the first lead tab.

According to some embodiments, the first lead tab may be bent and arranged to be placed between a lower surface of the electrode assembly and a bottom surface of the case, and the sealing member may be arranged between the lower surface of the electrode assembly and the bent first lead tab.

According to some embodiments, the sealing member may be configured to adhere the first lead tab to an inner side of the case by a pressure from the electrode assembly in response to the cap assembly being coupled to the case.

According to some embodiments, the sealing member may include an (electrical) insulator having elasticity (e.g. an elastic electrical insulator) .

According to some embodiments of the present disclosure, an area where a central substrate is placed, and an area where a central substrate is absent may be placed between a pair of substrates. In other words, the first and second central substrates do not overlap each other (in the stacking direction of the electrode assembly). According to some embodiments, the area without a central substrate (or the gap between the non-overlapping first and second central substrates) may be provided as a heat dissipation path, which may relatively improve the thermal management of a secondary battery under high-power conditions.

According to some embodiments of the present disclosure, the current path control using the area without the central substrate may prevent or reduce the current concentration in specific areas. In addition, the area without the central substrate may relatively increase the flexibility of the electrode, which may prevent or reduce the damage to the electrode due to external impacts or vibrations, thereby relatively enhancing the mechanical durability of batteries.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
- FIG. 1: is a perspective view illustrating a secondary battery according to some embodiments of the present disclosure;
- FIG. 2: is an exploded perspective view illustrating aspects of a secondary battery shown in FIG. 1;
- FIG. 3: is a cross-sectional view taken along the line A-A' of the secondary battery shown in FIG. 1;
- FIG. 4: is a cross-sectional view illustrating a secondary battery according to some embodiments of the present disclosure;
- FIG. 5: is a cross-sectional view illustrating an electrode assembly according to some embodiments of the present disclosure;
- FIG. 6: is an exploded view illustrating the electrode assembly of FIG. 5;
- FIG. 7: is a top view illustrating the electrode assembly shown in FIG. 5;
- FIGS. 8 and 9: are views illustrating an example of a central substrate according to some embodiments of the present disclosure;
- FIG. 10: is a view illustrated to explain a direction where a substrate tab included in an electrode assembly extends from a central substrate according to some embodiments of the present disclosure;
- FIGS. 11 and 12: are cross-sectional views illustrating an electrode assembly according to some embodiments of the present disclosure;
- FIG. 13: is a flowchart showing aspects of a manufacturing method of a secondary battery according to some embodiments of the present disclosure;
- FIG. 14: is a view illustrated to explain aspects of a manufacturing process of a secondary battery according to a comparative example; and
- FIG. 15: is a view illustrated to explain a manufacturing process of a secondary battery according to some embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be arranged in contact with the upper (or lower) surface of the element, and another element may also be interposed between the element and the arbitrary element located on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used in this specification are for describing embodiments of the present disclosure and are not intended to limit the scope of the disclosure.

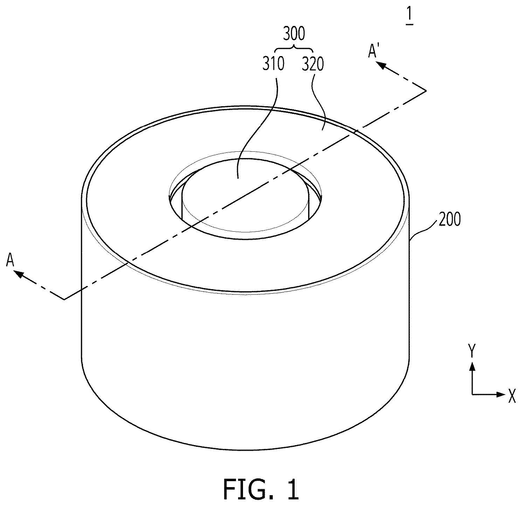

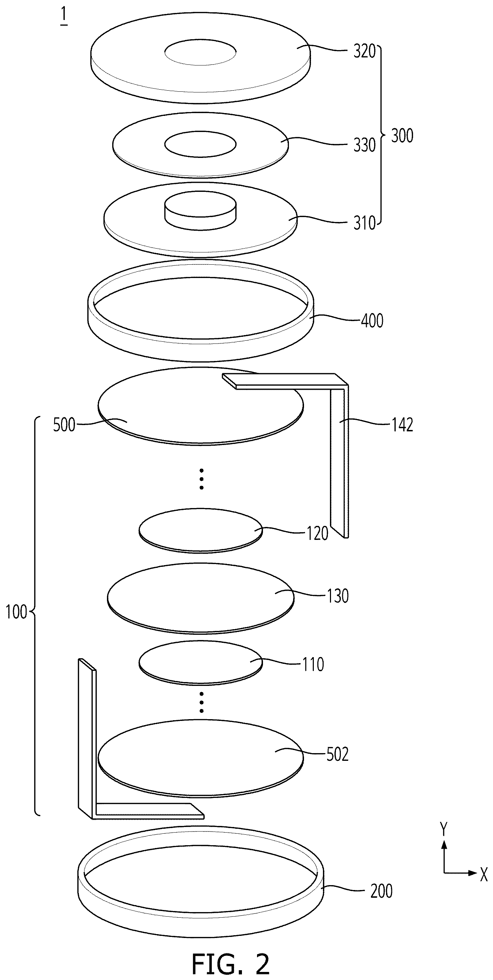

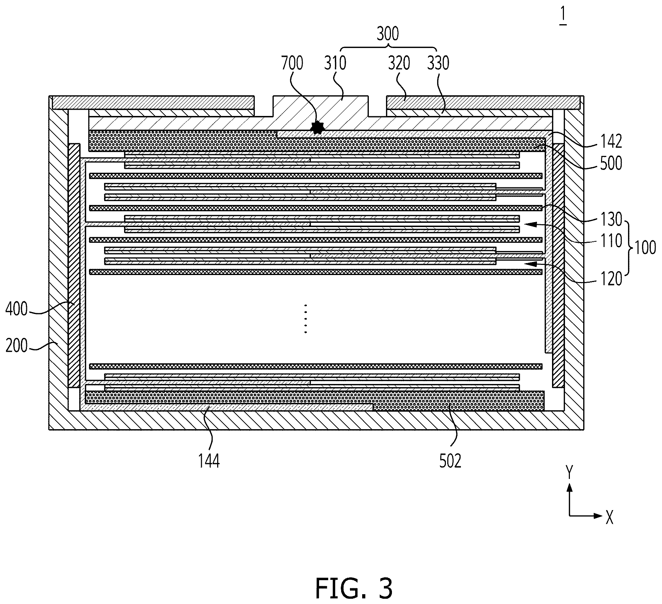

FIG. 1 is a perspective view illustrating a secondary battery according to some embodiments of the present disclosure. FIG. 2 is an exploded perspective view of the secondary battery shown in FIG. 1. FIG. 3 is a cross-sectional view taken along the line A-A' of the secondary battery shown in FIG. 1.

A secondary battery 1 according to one or more embodiments is a micro-sized secondary battery and may be a coin cell or a button cell but is not limited thereto and may be a cylindrical or pin-type battery.

The coin cell or button cell is a battery in the form of a thin coin or button and may refer to a battery having a ratio of height to diameter (height/diameter) of 1 or less but is not limited thereto. Because the coin cell or button cell is generally cylindrical, the cross section in the horizontal direction is generally circular. However, the cross section in the horizontal direction is not limited thereto and may have an elliptical or polygonal shape. The diameter may refer to a maximum distance in the horizontal direction of the battery, and the height may refer to a maximum distance in the vertical direction of the battery (e.g., distance from the flat bottom surface to the flat top surface of the battery).

Referring to FIG. 1 to FIG. 3, a secondary battery 1 according to some embodiments of the present disclosure may include an electrode assembly 100, a case 200, a cap assembly 300, an insulating member 400, and sealing members 500 and 502.

The electrode assembly 100 may include a first electrode 110, a second electrode 120, and a separator 130. The electrode assembly 100 may be a stacked electrode assembly. For example, the electrode assembly 100 may include an electrode stack formed by stacking the first electrode 110, the separator 130, and the second electrode 120. The electrode stack may be formed by alternately stacking unit cells, each of unit cells including the first electrode 110, the separator 130, and the second electrode 120. The first electrode 110 may be a negative electrode, and the second electrode 120 may be a positive electrode. Alternatively, the first electrode 100 may be a positive electrode and the second electrode 120 may be a negative electrode.

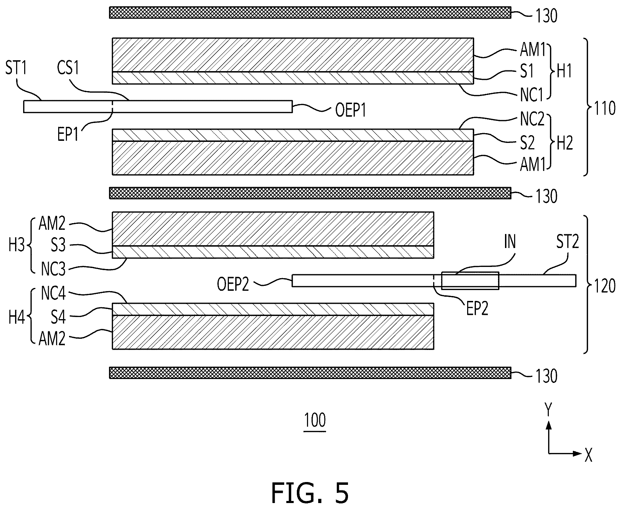

According to some embodiments, the first electrode 110 may include a first substrate, a second substrate, a first central substrate, and a first substrate tab. A first active material layer may be located on one surface of the first substrate, a first non-coated part may be formed on the other surface of the first substrate, a first active material layer may be located on one surface of a second substrate, and a second non-coated part may be formed on the other surface of the second substrate. The first central substrate may be placed between a portion of the other surface of the first substrate and a portion of the other surface of the second substrate. The first substrate tab may extend from one end of the first central substrate. The description on components of the first electrode will be detailed below from FIG. 5.

According to some embodiments, the second electrode 120 may include a third substrate, a fourth substrate, a second central substrate, and a second substrate tab. A second active material layer may be located on one surface of the third substrate, a third non-coated part may be formed on the other surface of the third substrate, a second active material layer may be located on one surface of the fourth substrate, and a fourth non-coated part may be formed on the other surface of the fourth substrate. The second central substrate may be placed between a portion of the other surface of the third substrate and a portion of the other surface of the fourth substrate. The second substrate tab may extend from one end of the second central substrate. The description on components of the second electrode will be detailed below from FIG. 5.

According to some embodiments, the separator 130 may be placed between the first electrode 110 and the second electrode 120. For example, the separator 130 may be placed between the first active material layer of the first electrode 110 and the second active material layer of the second electrode 120. The separator 130 may insulate the first electrode 110 and the second electrode 120, and exchange lithium ions between the first electrode 110 and the second electrode 120. The separator 130 may be formed to have a length sufficient to completely insulate between the first electrode 110 and the second electrode 120 even with contraction or expansion of the electrode assembly 100 during the charging or discharging of the secondary battery 1.

The separator 130 may include polyethylene, polypropylene, polyvinylidene fluoride, or a multilayer film of two or more layers thereof.

The separator 130 may include a porous substrate and a coating layer including an organic material, an inorganic material, or a combination thereof on one or both surfaces of the porous substrate. The organic material may include a polyvinylidene fluoride-based polymer or a (meth)acrylic polymer. The inorganic material may include inorganic particles selected from Also, SeO, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto. The organic material and the inorganic material may be mixed in one coating layer, or a coating layer including an organic material and a coating layer including an inorganic material may be stacked.

A first lead tab 144 may be connected to the first electrode 110 of the electrode assembly 100. The first lead tab 144 may be placed between the electrode assembly 100 and one inner side of the case 200. The first lead tab 144 may be bent to be connected to the internal bottom surface of the case 200. For example, the first lead tab 144 may include a first body placed between the outer circumference of the electrode assembly 100 and the inner circumference of the case 200, and a second body extending from the first body and bent first to be placed between the lower surface of the electrode assembly 100 and the inner bottom surface of the case 200. The first lead tab 144 may be linked to the first substrate tab, thereby connecting to the first electrode 110. A plurality of first substrate tabs may be bonded to the first body of the first lead tab 144 through a bonding process such as welding. The first lead tab 144 may be connected to the first electrode 110 to function as a current path of the case 200. However, the connection structure of the first lead tab 144 and the case 200 is not limited thereto.

A second lead tab 142 may be connected to the second electrode 120 of the electrode assembly 100. The second lead tab 142 may be placed between the electrode assembly 100 and the one inner side of the case 200. The second lead tab 142 may be bent to be connected to the one inner side of the cap assembly 300. For example, the second lead tab 142 may include a third body placed between the outer circumference of the electrode assembly 100 and the inner circumference of the case 200, and a fourth body extending from the third body and bent first to be placed between the upper surface of the electrode assembly 100 and one inner side of the cap assembly 300. The second lead tab 142 may be linked to the second substrate tab, thereby connecting to the second electrode 120. For example, a plurality of second substrate tabs may be bonded to the third body of the second lead tab 142 through a bonding process such as welding. The second lead tab 142 may be connected to the second electrode 120 to function as a current path of a terminal plate 310. However, the connection structure of the second lead tab 142 and the terminal plate 310 is not limited thereto.

The case 200 may include an opening with one side open to accommodate the electrode assembly 100. The case 200 may be electrically connected to the first electrode 110. For example, the case 200 may be connected to the first substrate tab included in the first electrode 110 or the first lead tab 144 connected to the first substrate tab to function as a negative electrode.

According to some embodiments, the case 200 may form the entire exterior of the secondary battery 1. For example, the case 200 may be a cylindrical shape with one side open. The case 200 may include a circular bottom surface and a sidewall vertically extending from the circumference of the bottom surface. The diameter of the bottom surface of the case 200 may be greater than the height of the sidewall, which allows the secondary battery 1 to be formed as a bottom-type or a coin-type battery.

According to some embodiments, the case 200 may have an accommodation space to accommodate the electrode assembly 100 with the open top surface facing the bottom surface of the case 200. After the electrode assembly 100 is accommodated in the case 200, one open side of the case 200 may be covered by the cap assembly 300 to seal the electrode assembly 100. The top surface of the sidewall of the case 200 may have a step from the outer side to the inner side. The cap assembly 300 may be engaged with the step of the case 200 through metal coupling, but the coupling method of the case 200 and the cap assembly 300 is not limited thereto.

The cap assembly 300 may be coupled to the one open side of the case 200 to seal the opening of the case 200. The cap assembly 300 may cover the one open side of the case 200 to seal the electrode assembly 100 accommodated inside the case 200 from the outside.

According to some embodiments, the cap assembly 300 may include a terminal plate 310, a cap plate 320, and a cap insulating layer 330.

According to some embodiments, the terminal plate 310 may be connected to the second electrode 120. The terminal plate 310 may be located on a second sealing member 500. The second tab or the second lead tab 142 may be located between the terminal plate 310 and the second sealing member 500. The terminal plate 310 may be electrically connected to the second electrode 120 through the second substrate tab or the second lead tab 142.

The cap insulating layer 330 and the cap plate 320 may be sequentially arranged on the terminal plate 310. The terminal plate 310 may include a protrusion that protrudes upwardly from the center area. The protrusion may outwardly protrude through the first opening of the cap plate 320 and the second opening of the cap insulating layer 330.

The cap plate 320 may be bonded to the one open side of the case 200. For example, the cap plate 320 may be mounted on the outer sidewall of the case 200 to be bonded to the case 200. The cap plate 320 may be arranged on the cap insulating layer 330.

The cap plate 320 may include the first opening. The cap plate 320 may have a disc shape with the first opening at the center. The protrusion of the terminal plate 310 may be connected to an external terminal through the first opening of the cap plate 320.

The cap insulating layer 330 may be placed on the terminal plate 310. The cap insulating layer 330 may be placed between the terminal plate 310 and the cap plate 320 to insulate between the terminal plate 310 and the cap plate 320. The terminal plate 310 may be connected to the second electrode 120, and the cap plate 320 may contact the case 200 connected to the electrode 110. The cap insulating layer 330 may be placed between the terminal plate 310 and the cap plate 320 to insulate between the terminal plate 310 and the cap plate 320.

The cap insulating layer 330 may include the second opening. The cap insulating layer 330 may have a disc shape with the second opening at the center. The protrusion of the terminal plate 310 may be connected to an external terminal through the second opening.

The insulating member 400 may be placed inside the case 200. The insulating member 400 may be configured to insulate between the electrode assembly 100 and the case 200 formed of a conductive material. Referring to FIG. 2, the insulating member 400 may have a hollow cylinder shape to surround the electrode assembly 100 or a hollow cylindrical structure. However, the shape of the insulating member 400 is not limited thereto. For example, it is sufficient for the insulating member 400 to have a structure that prevents or reduces instances of a short-circuit between the electrode assembly 100 and one side of the case 200.

The insulating member 400 may correspond to the first substrate tab to be placed on the inner side of the case 200. For another example, the insulating member 400 may be placed on the inner of the case 200 in response to the area of the second substrate tab to prevent or reduce a short-circuit between the case 200 connected to the first substrate tab and the second substrate tab. The insulating member 400 may be formed of an insulating tape made of a polymer material, but the material of the insulating member 400 is not limited thereto.

A first sealing member 502 may be placed between the electrode assembly 100 and the case 200. With respect to the direction in which the electrode assembly 100 is stacked, the first sealing member 502 may be placed on the bottom side of the electrode assembly. The first sealing member 502 may be placed between the electrode assembly 100 and the first lead tab 144. The first sealing member 502 may be placed between the lower side of the electrode assembly 100 and the first lead tab 144, and the first lead tab 144 may be placed on the lower side of the first sealing member 502.

The first sealing member 502 may connect the first electrode 110 to the case 200. The first lead tab 144 may be placed on the lower surface of the first sealing member 502, and the first sealing member 502 may be compressed between the electrode assembly 100 and the case 200 by the pressure from the cap assembly 300 to adhere the first lead tab 144 to the case 200. The first lead tab 144 may be closely connected to the case 200 by the pressure applied from the first sealing member 502. Therefore, the first lead tab 144 may be electrically connected to the inner bottom surface of the case 200 by the pressure applied from the first sealing member 502 without a separate bonding process such as welding, etc.

The first sealing member 502 may include an insulator with elasticity. The first sealing member 502 may be an electrically insulating elastic body compressed (i.e. compressible) by the pressure from the cap assembly 300. The first sealing member 502 may be formed of an (electrically) insulating material, and may prevent or reduce instances of the short-circuit occurring between the component other than the first electrode 110 of the electrode assembly 100 and the case 200. The sealing member 502 may include elastic rubber, (elastic) silicone, (elastic) polymer, etc., but the material of the first sealing member 502 is not limited thereto. For example, various elastic insulators may be used depending on requirements for thermal stability, durability, and electrical insulation properties of the battery.

The first sealing member 502 may include a porous material having elasticity. In other words, the first sealing member 502 may be elastic and may consist of a porous electrically insulating material. The first sealing member 502 may include a porous electrically insulating material that is compressible to seal the first lead tab 144 and the case 200 and is capable of absorbing (e.g. containing) an electrolyte to prevent a leakage. The first sealing member 502 may have a sponge structure, a honeycomb structure, or a porous structure having pores of various shapes. However, the structure of the first sealing member 502 is not limited thereto.

The second sealing member 500 may be placed between the electrode assembly 100 and the cap assembly 300. With respect to the stacking direction of the electrode assembly, the second sealing member 500 may be placed on the upper surface of the electrode assembly. The second sealing member 500 may be placed between the electrode assembly 100 and the second lead tab 142. The second sealing member 500 may be placed between the upper surface of the electrode assembly 100 and the second lead tab 142, and the second lead tab 142 may be placed on the upper surface of the second sealing member 500.

The second sealing member 500 may connect the second electrode 120 to the cap assembly 300. The second lead tab 142 may be placed on the upper surface of the second sealing member 500, and the second sealing member 500 may be compressed between the electrode assembly 100 and the cap assembly 300 by the pressure from the cap assembly 300 to closely connect the second lead tab 142 to the cap assembly 300. The second lead tab 142 may be closely connected to the cap assembly 300 by the pressure from the second sealing member 500. Therefore, the second lead tab 142 may be electrically connected to one inner side of the cap assembly 300 by the pressure from the second sealing member 500 without a separate bonding process such as welding. However, the connection structure of the second lead tab 142 and the one inner side of the cap assembly 300 is not limited thereto, but a separate bonding process such as welding may be additionally performed.

The second sealing member 500 may include an insulator having elasticity. The second sealing member 500 may be an electrically insulating elastic body compressed (i.e. compressible) by the pressure from the cap assembly 300. The second sealing member 500 may be formed of an (electrically) insulating material, and a short-circuit between the component of the electrode assembly 100 other than the second electrode 120 and the cap assembly 300 may be prevented or reduced. The second sealing member 500 may include elastic rubber, (elastic) silicone, (elastic) polymer, etc., but the material of the second sealing member 500 is not limited thereto. For example, various elastic insulators may be used according to requirements for thermal stability, durability, and electrical insulation properties of the battery.

The second sealing member 500 may include a porous material having elasticity. In other words, the second sealing member 500 may be elastic and may consist of a porous electrically insulating material. The second sealing member 500 may include a porous electrically insulating material that is compressible to closely connect the second lead tab 142 to the cap assembly 300, and is capable of absorbing (e.g. containing) an electrolyte to prevent a leakage. The second sealing member 500 may have a sponge structure, a honeycomb structure, or a porous structure having pores of various shapes. However, the structure of the second sealing member 500 is not limited thereto.

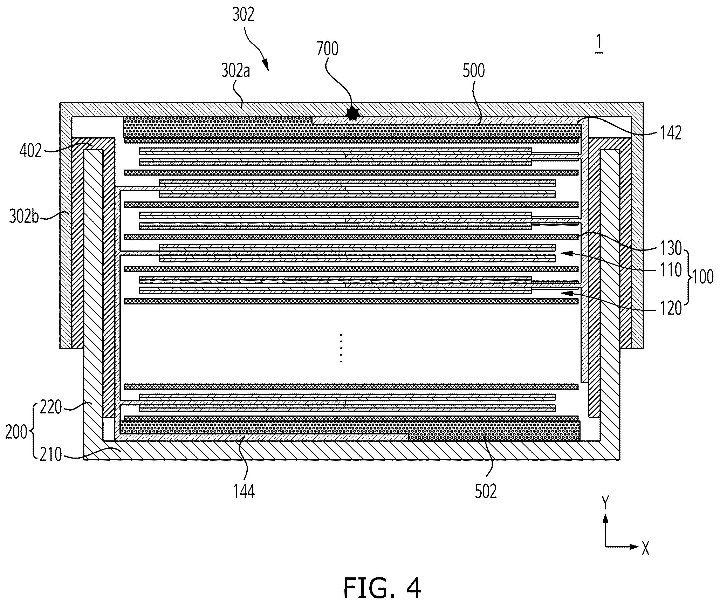

FIG. 4 is a cross-sectional view illustrating a secondary battery according to some embodiments of the present disclosure. Referring to FIG. 4, a secondary battery 1 may include an electrode assembly 100 comprising a first electrode 110 connected to a first lead tab 144, a second electrode 120 connected to a second lead tab 142 and a separator 130, a case 200, a cap assembly 302, an insulating member 402, and sealing members 500 and 502. In the description of FIG. 4, some redundant description from FIG. 1 to FIG. 3 may be omitted

The case 200 may include an opening with one side open to accommodate the electrode assembly 100. The case 200 may be electrically connected to the first electrode 110. For example, the case 200 may be connected to the first substrate tab included in the first electrode 110, or the first lead tab 144 connected to the first substrate tab to function as a negative electrode.

The case 200 may include a bottom surface 210 and a sidewall 220 vertically extending from the circumference of the bottom surface 210. The bottom surface 210 may have a circular shape, and the sidewall 220 may vertically extend from the circumference of the bottom surface 210.

The cap assembly 302 may be coupled to the one open side of the case 200 to seal the opening of the case 200. The cap assembly 302 may cover the one open side of the case 200 to seal the electrode assembly 100 accommodated inside the case 200 from the outside. The cap assembly 302 may be electrically connected to the second electrode. For example, the cap assembly 302 may be connected to the second substrate tab included in the second electrode 120 or the second lead tab 142 connected to the second substrate tab to function as a positive electrode.

The cap assembly 302 may be connected to the second electrode 120. The second electrode tab or the second lead tab 142 may be placed between the cap assembly 302 and the second sealing member 500. The cap assembly 302 may be electrically connected to the second electrode 120 through the second substrate tab or the second lead tab 142. The second lead tab 142 and the cap assembly 302 may be physically connected through a bonding process such as welding 700, etc. The cap assembly 302 may function as a terminal plate (e.g., 310 of FIG. 2).

The cap assembly 302 may seal the opening of the case 200 by covering open one side of the case 200. The cap assembly 302 may include a flat part 302a and a wing part 302b vertically extending from the flat part 302a. The area of the flat part 302a may be greater than the area outside the sidewall 220 of the case 200. The wing part 302b may have a structure corresponding to the shape of the sidewall 220 of the case 200. For example, the wing part 302b may be placed to be spaced apart from the sidewall 220 of the case 200 by a distance (e.g., a set or predetermined distance). The cap assembly 302 may function as a cap plate (e.g., 320 of FIG. 2).

The insulating member 402 may be placed to insulate the electrode assembly 100, the case 200, and the cap assembly 302. The insulating member 402 may include a first insulating member placed on the inner side of the case 200 to insulate between the case 200 and the electrode assembly 100. The insulating member 402 may include a second insulating member placed on the outer side of the case 200 and the sidewall 220 of the case 200 to insulate between the case 200 and the cap assembly 302. Referring to FIG. 4, the insulating member 402 may have a shape formed by integrating the first insulating member to the second insulating member. However, the shape of the insulating member 402 is not limited thereto, but may have various shapes to insulate between the electrode assembly 100, the case 200, and the cap assembly 302.

The insulating member 402 may be configured to adhere between the electrode assembly 100, the case 200, and the cap assembly 302. The insulating member 402 may maintain the physical bonding between the electrode assembly 100 and the case and/or the case 200 and the cap assembly 300 to ensure the structural stability of the secondary battery. For example, the insulating member 402 may include a pressure-sensitive adhesive to be adhered to the inner side, the outer side and the sidewall 220 of the case 200. The portion of the insulating member 402 that contacts the electrode assembly 100 may be formed of a polymer material, and the adhesion between the insulating member 402 and the electrode assembly 100 may be improved. The portion of the insulating member 402 that contacts the inner side of the wing part 302b of the cap assembly 302 may be metal-friendly coated, which enhances the adhesion between the cap assembly 302 made of a metal material and the case 200. The insulating member 402 may include an insulating polymer material having a high permittivity or a non-conductive coating material for electrical insulation between the cap assembly 302 and the case 200.

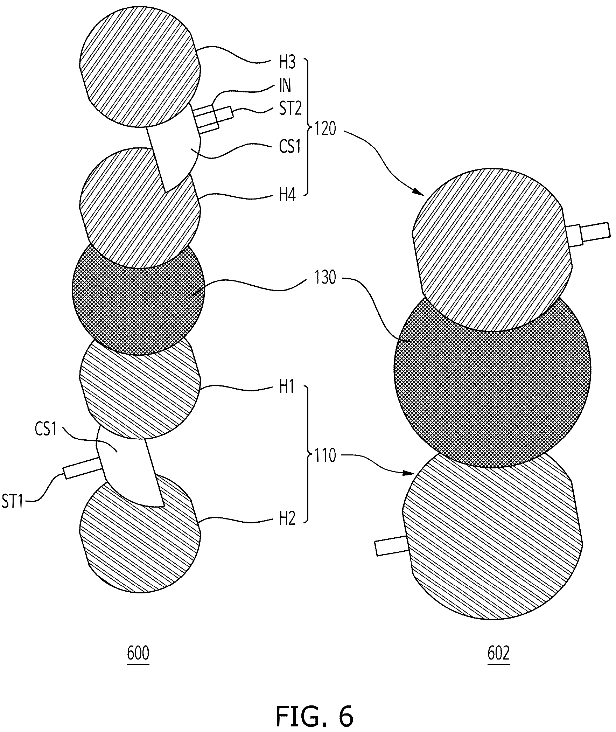

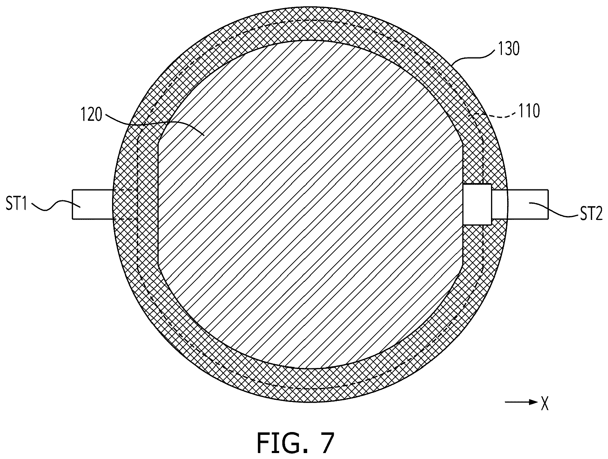

FIG. 5 is a cross-sectional view illustrating an electrode assembly 100 according to some embodiments of the present disclosure. FIG. 6 is an exploded view illustrating the electrode assembly shown in FIG. 5. FIG. 7 is a top view illustrating the electrode assembly shown in FIG. 5. Referring to FIG. 5 to FIG. 7, the electrode assembly 100 according to some embodiments of the present disclosure may be formed by alternately stacking unit cells, each including a first electrode 110, a separator 130, and a second electrode 120.

The electrode assembly 100 may include the first electrode 110, the second electrode 120 and the separator 130. In the description of FIG. 5 to FIG. 7, some redundant description from FIG. 1 to FIG. 4 may be omitted.

The first electrode 110 may include a first half-coating substrate H1, a second half-coating substrate H2, a first central substrate CS1, and a first substrate tab ST1. The first half-coating substrate H1 may include a first active material layer AM1 on one surface, and a first substrate S1 as a first non-coated part NC1 on the other surface. The second half-coating substrate H2 may include the first active material layer AM1 on one surface, and a second substrate S2 as a second non-coated part NC2 on the other surface.

The first substrate S1 may be formed of a conductive material. For example,

the substrate S1 may be a current collector formed of a metal foil such as copper, copper alloy, nickel, nickel alloy, aluminum, or aluminum alloy. The first substrate S1 may have a circular shape. However, the shape of the first substrate S1 is not limited thereto, but may be a polygonal such as a triangle or square, or an irregular shape. The detailed description of the shape of the first substrate S1 will be made below from FIG. 6.

The second substrate S2 may be formed of a conductive material. For example,

the second substrate S2 may be a current collector formed of a metal foil such as copper, copper alloy, nickel, nickel alloy, aluminum, or aluminum alloy. The second substrate S2 may have a circular shape. However, the shape of the second substrate S2 is not limited thereto, and may be a polygonal such as a triangle or square, or an irregular shape. The detailed description of the shape of the second substrate S2 will be made from FIG. 6.

The first active material layer AM1 of the first substrate S1 may be formed by coating the first active material on one surface of the first substrate S1. The first non-coated part NC1 may be formed by exposing the first substrate S1 because the first active material is not coated on the other surface of the first substrate S1. The other surface of first substrate S1 may be formed of an area without coating the first active material as the opposite surface to one surface of the first substrate S1. The first active material may include graphite or carbon, etc.

The first active material layer AM1 of the second substrate S2 may be formed by coating the first active material on one surface of the second substrate S2. The second non-coated part NC2 may be formed by exposing the second substrate S2 without coating the first active material on the other surface of the second substrate S2.

The other surface of the second substrate S2 may be formed of an area without coating the first active material as the area opposite to one surface of the second substrate S2.

The first central substrate CS1 may be placed between a portion of the other surface of the first substrate S1 and a portion of the other surface of the second substrate S2. The first central substrate CS1 may be placed between a portion of the first non-coated part NC1 of the first substrate S1 and a portion of the second non-coated part NC2 of the second substrate S2. Through such configuration, the space between the first substrate S1 and the second substrate S2 may include an area to which the first central substrate CS1 is inserted or placed and/or an area to which the first central substrate CS2 is not inserted or placed.

The first central substrate CS1 may be formed of a conductive material. For example, the first central substrate CS1 may be formed of the same material as the first substrate S1 and/or the second substrate S2. However, the material of the first central substrate CS1 is not limited thereto. For example, the materials of the first substrate S1, the second substrate S2 and the first central substrate CS1 may be different from each other.

The shape of the first central substrate CS1 may have a shape where one side and the other side are flat and the longitudinal axis length of one surface is greater than the longitudinal axis length of the other surface. However, the shape of the first central substrate CS1 is not limited thereto, but may be various shapes where the area of the first central substrate CS1 is smaller than the area of each of the first substrate S1 and the second substrate S2. The shape of the first central substrate CS1 will be described in detail from FIG. 6 below.

The first substrate tab ST1 may be connected to the first electrode 110. For example, the first substrate tab ST1 may be formed by extending from one end EP1 of the first central substrate CS1. The first substrate tab ST1 may be formed by extending the one end EP1 of the first central substrate CS1. The first substrate tab ST1 may be manufactured by stamping a portion of the first central substrate CS1. Through such configuration, the first substrate tab ST1 may be formed of a conductive material. The shape of the first substrate tab ST1 will be described in detail from FIG. 6 below.

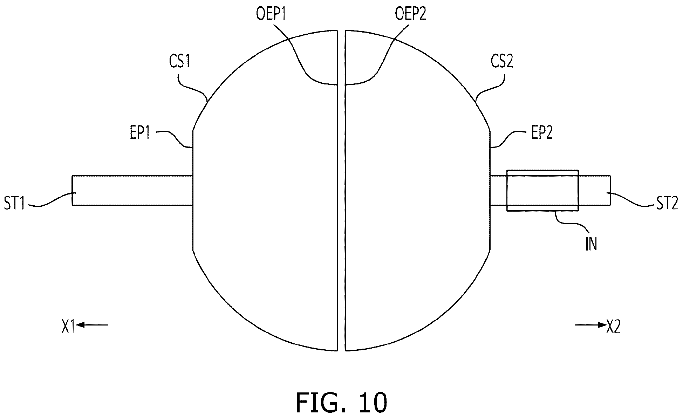

The first substrate tab ST1 connected to the first electrode 110 may be electrically connected to the case. For example, the first substrate tab ST1 may be welded to the inner bottom surface of the case. Each of a plurality of first substrate tabs ST1 may extend in the same direction -X from the first central substrate CS1 to face each other. The plurality of first substrate tabs ST1 may be welded and connected as one tab. The tab may function as a current path of the case connected to the first electrode 110. The description of the direction in which the first substrate tab ST1 protrudes will be detailed with reference to FIG. 10.

The first substrate tab ST1 may be electrically connected to the case. The first substrate tab ST1 may be placed between the electrode assembly 100 and one inner side of the case. For example, the first substrate tab ST1 may extend from the one end EP1 of the first central substrate CS1 to be bent first to face the bottom surface of the case, and secondarily bent to be placed between the lower surface of the electrode assembly 100 and the inner bottom surface of the case. The first substrate tab ST1 may be closely connected to the case by the pressure from the electrode assembly 100. For example, the first substrate tab ST1 may be electrically connected to the inner bottom surface of the case even with the pressure from the electrode assembly 100 without a separate bonding process such as welding. However, the structure where the first substrate tab ST1 is electrically connected to the case is not limited thereto, but a separate bonding process such as welding may be additionally performed.

The first substrate tab ST1 may include an insulating part coated with a film of an insulating material. The insulating part may protect the first substrate tab ST1 and adjacent components from electrical interference or short-circuit that may occur during the charging and discharging process of a secondary battery.

The second electrode 120 may include a third half-coating substrate H3, a fourth half-coating substrate H4, a second central substrate CS2, and a second substrate tab ST2. The third half-coating substrate H3 may include a second active material layer AM2 on one surface of and a third substrate S3 as a third non-coated part NC3 on the other surface. The fourth half-coating substrate H4 may include a second active material layer AM2 on one surface and a fourth substrate as a fourth non-coated part NC4 on the other surface.

The third substrate S3 may be formed of a conductive material. For example, the third substrate S3 may be a current collector formed of a metal foil such as copper, copper alloy, nickel, nickel alloy, aluminum, or aluminum alloy. The third substrate S3 may have a circular shape. However, the shape of the third substrate S3 is not limited thereto, and may have a polygonal such as a triangle or square or an irregular shape. The shape of the third substrate S3 will be described in detail from FIG. 6 below.

The fourth substrate S4 may be formed of a conductive material. For example,

the fourth substrate S4 may be a current collector formed of a metal foil such as copper, copper alloy, nickel, nickel alloy, aluminum, or aluminum alloy. The fourth substrate S4 may have a circular shape. However, the shape of the fourth substrate S4 is not limited thereto, and may have a polygonal such as a triangle or square or an irregular shape. The shape of the fourth substrate S4 will be described in detail from FIG. 6 below.

The second active material layer AM2 of the third substrate S3 may be formed by coating the second active material on one surface of the third substrate S3. The third non-coated part NC3 may be formed by exposing the third substrate S3 without coating the second active material on the other surface of the third substrate S3. The other surface of the third substrate S3 may be an area without coating the second active material as the surface opposite to one surface of the third substrate S3. The second active material may include a transition metal oxide, etc.

The second active material layer AM2 of the second substrate S4 may be formed by applying the second active material to one surface of the fourth substrate S4. The fourth non-coated part NC4 may be formed by exposing the fourth substrate S4 without coating the second active material to the other surface of the fourth substrate S4. The other surface of the fourth substrate S4 may be an area without coating the second active material as the surface opposite to one surface of the fourth substrate S4.

The second central substrate CS2 may be placed between a portion of the other surface of the third substrate S3 and a portion of the other surface of the fourth substrate S4. The second central substrate CS2 may be placed between a portion of the third non-coated part NC3 of the third substrate S3 and a portion of the fourth non-coated part NC4 of the fourth substrate S4. Through such configuration, the space between the third substrate S3 and the fourth substrate S4 may include an area to which the second central substrate CS2 is inserted or placed and/or the second central substrate CS2 is not inserted or placed.

The second central substrate CS2 may be formed of a conductive material. For example, the second central substrate CS2 may be formed of the material same as the third substrate S3 and/or the fourth substrate S4. However, the material of the second central substrate CS2 is not limited thereto. For example, the materials of the third substrate S3, the fourth substrate S4 and the second central substrate CS2 may be different from one another.

The second central substrate CS2 may include a shape in which one side and the other side are flat and the longitudinal axis length of one side is greater than the longitudinal axis length of the other side. However, the shape of the second central substrate CS2 is not limited thereto, but may have various shapes in which the area of the second central substrate CS2 is smaller than the area of each of the third substrate S3 and the fourth substrate S4. The shape of the second central substrate CS2 will be described in detail from FIG. 6 below.

The second substrate tab ST2 may be connected to the second electrode 120. For example, the second substrate tab ST2 may be formed by extending from one end EP2 of the second central substrate CS2. The second substrate tab ST2 may have a structure in which the one end EP2 of the second central substrate CS2 is extended. The second substrate tab ST2 may be manufactured by stamping a portion of the second central substrate CS2. Through this configuration, the second substrate tab ST2 may be formed of a conductive material. The shape of the second substrate tab ST2 will be described in detail from FIG. 6 below.

The second substrate tab ST2 connected to the second electrode 120 may be electrically connected to a terminal plate. The second substrate tab ST2 may be welded to one inner side of the cap assembly. Each of a plurality of second substrate tabs ST2 may extend in the same direction X from the second central substrate CS2 to face each other. The plurality of second substrate tabs ST2 may be welded and connected as one tab. The tab may function as a current path of the cap assembly connected to the second electrode 120. The description of the protruding direction of the second substrate tab ST2 will be detailed with reference to FIG. 10.

The second substrate tab ST2 may have a structure that is electrically connected to the terminal plate. The second substrate tab ST2 may be placed between the electrode assembly 100 and one inner side of the cap assembly. For example, the second substrate tab ST2 may extend from the one end EP2 of the second central substrate CS2 to be bent toward one inner side of the cap assembly, and then secondarily bent to be placed between the lower surface of the electrode assembly 100 and one inner side of the cap assembly. The second substrate tab ST2 may be closely connected to the cap assembly by the pressure from the electrode assembly 100. For example, the second substrate tab ST2 may be electrically connected to one inner side of the cap assembly only by the pressure from the electrode assembly 100 without a separate bonding process such as welding. However, the structure in which the second substrate tab ST2 and the terminal plate are electrically connected is not limited thereto, but a separate bonding process such as welding may be additionally performed.

The second substrate tab ST2 may include an insulating part IN coated with a film made of an insulating material. For example, the second substrate tab ST2 may include the insulating part IN placed at the area connected to the second electrode 120. The insulating part IN may be connected to one side of the second electrode 120, and placed in one area of the second electrode 120 that faces the first electrode 110. This configuration may provide the insulating part IN of the second substrate ST2 in addition to the separator 130 located between the first electrode 110 and the second electrode 120, thereby preventing or reducing instances of a short-circuit occurring when the area of the first electrode 110 is greater than the area of the second electrode 120. For example, the insulating part IN may be included in the second substrate tab ST2, thereby preventing or reducing instances of a short-circuit with the first electrode 110, which may occur during the process of bending the second substrate tab ST2 extended from the second central substrate CS2 of the second electrode 120. The insulating part IN may protect the second substrate tab ST2 and the adjacent components from electrical interference or short-circuit that occurs during the charging and discharging of a secondary battery.

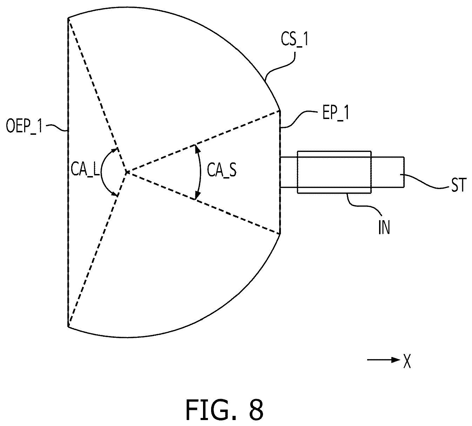

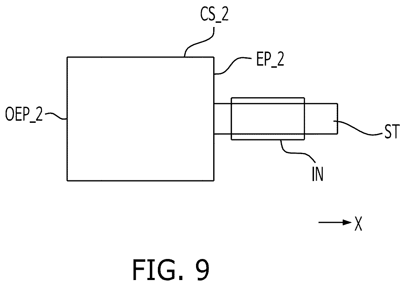

FIG. 8 and FIG. 9 are views illustrating an example of a central substrate according to some embodiments of the present disclosure. According to some embodiments, the electrode may include a central substrate and a substrate tab ST. The substrate tab ST may be formed by extending one end of the central substrate. The substrate tab ST may further include the insulating part IN coated with a film made of an insulating material.

In the description of FIG. 8 and FIG. 9, some redundant description from FIG. 1 to FIG. 7 may be omitted.

Referring to FIG. 8, a central substrate CS_1 may have the shape of a circle. The central substrate CS_1 may have a shape including a convex surface that connects one side (or the surface of the other end OEP_1) and the other side (or the surface of one end EP_1). The substrate tab ST may be formed to extend in a first direction X from the other side of the central substrate CS_1.

The central substrate CS_1 may have a shape in which one side and the other side are flat, and the longitudinal axis length of the one side (or the straight length of the other end OEP_1) is greater than the length of the other side (or the straight length of one end EP_1). For example, one end EP_1 of the central substrate CS_1 may correspond to an arc corresponding to a first central angle CA_S, and the other end OEP_1 of the central substrate CS_1 may correspond to an arc corresponding to a second central angle CA_L.

Referring to FIG. 9, the central substrate CS_2 may have a polygonal shape such as a square. The central substrate CS_2 may have a shape including a plane that connects one side (or the surface of the other end OEP_2), and the other side (or the surface of one end EP_2). The substrate tab ST may be formed by extending in the first direction X from the other side of the central substrate CS_2.

The central substrate CS_2 may have a shape in which one side and the other side are flat, and the longitudinal axis length of the one side (or the straight length of the other end OEP_2) and the length of the other side (or the straight length of one end EP_2) are the same. For example, each of the one end EP_2 and the other end OEP_2 of the central substrate CS_2 may correspond to a side of a rectangular shape.

FIG. 10 is a view illustrated to explain a direction where a substrate tab included in an electrode assembly extends from a central substrate. In the description of FIG. 10, some redundant description from FIG. 1 to FIG. 9 may be omitted.

The electrode assembly may include a first electrode, a second electrode, and a separator. The first electrode may include the first central substrate CS1 and the first substrate tab ST1, and the second electrode may include the second central substrate CS2 and the second substrate tab ST2. The first substrate tab ST1 may be formed by extending in a first direction X1 from the one end EP1 of the first central substrate CS1. The second substrate tab ST2 may be formed by extending in a second direction X2 from the one end EP2 of the second central substrate CS2. The first substrate tab ST1 or the second substrate tab ST2 may include the insulating part IN coated with a film of an insulating material.

The first direction X1 in which the first substrate tab ST1 extends from the one end EP1 of the first central substrate CS1 and the second direction X2 in which the second substrate tab ST2 extends from the one end EP2 of the second central substrate CS2 may be different from each other. Referring to FIG. 10, the first direction X1 and the second direction X2 may be opposite directions. However, the first direction X1 and the second direction X2 are not limited thereto, but may have various combinations when the first and second electrodes are not short-circuited.

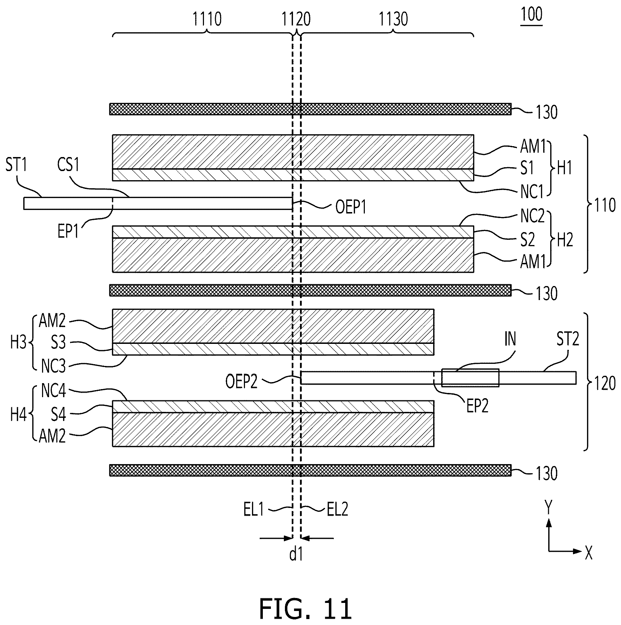

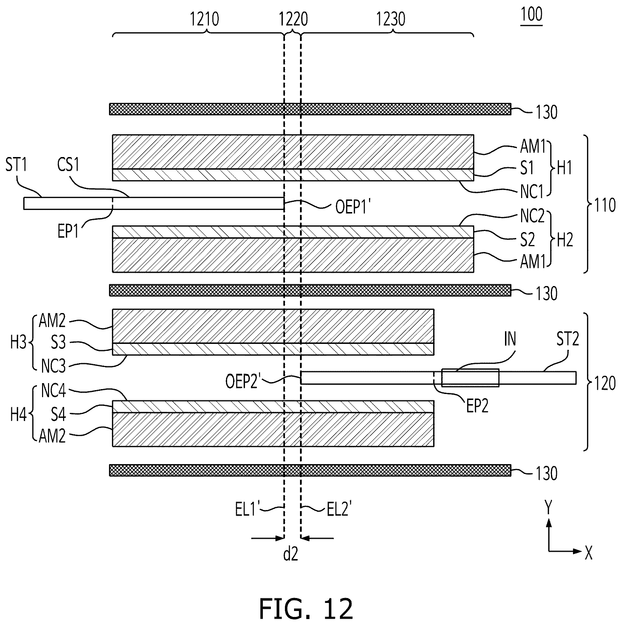

FIG. 11 and FIG. 12 are cross-sectional views illustrating an electrode assembly according to some embodiments of the present disclosure. The electrode assembly 100 may include the first electrode 110, the second electrode 120, and the separator 130. In the description of FIG. 11 and FIG. 12, some redundant description from FIG. 1 to FIG. 10 may be omitted.

The first electrode 110 may include a first half-coating substrate H1, a second half-coating substrate H2, a first central substrate CS1, and a first substrate tab ST1. The first half-coating substrate H1 may include a first active material layer AM1 on one surface and a first substrate S1 as a first non-coated part NC1 on the other surface. The second half-coating substrate H2 may include the first active material layer AM1 one surface and a second substrate S2 as a second non-coated part NC2 on the other surface. The first substrate tab ST1 may be formed by extending in a first direction -X from the one end EP1 of the first central substrate CS1.

The second electrode 120 may include a third half-coating substrate H3, a fourth half-coating substrate H4, a second central substrate CS2 and a second substrate ST2. The third half-coating substrate H3 may include a second active material layer AM2 one surface and a third substrate S3 as a third non-coated part NC3 on the other surface. The fourth half-coating substrate H4 may include the second active material layer AM2 on one surface and a fourth substrate S4 as a fourth non-coated part NC4 on the other surface. The second substrate tab ST2 may be formed by extending in the second direction X from the one end EP2 of the second central substrate CS2. In addition, the second substrate tab ST2 may include the insulating part IN coated with a film of an insulating material.

The electrode assembly 100 may have a stacked structure where a plurality of first electrodes 110, a plurality of separator 130, and a plurality of second electrode 120 are alternately stacked. The separator 130 may be located between the first active material layer AM1 of the first electrode 110 and the second active material layer AM2 of the second electrode 120.

The first central substrate CS1 may be placed between a portion of the other surface of the first substrate S1 where the first non-coated part NC1 is formed and a portion of the other surface of the second substrate S2 where the second non-coated part NC2 is formed. The second central substrate CS2 may be placed between a portion of the other surface of the third substrate S3 where the third non-coated part NC3 is formed and a portion of the other surface of the fourth substrate S4 where the fourth non-coated part NC4 is formed.

A space between a pair of substrates (S1 and S2, S3 and S4) may include an area to which central substrates CS1 and CS2 are inserted or placed and/or the central substrates CS1 and CS2 are not inserted or placed. The configuration that uses the area where the central substrate CS1 and CS2 are not placed may provide a heat dissipation path, and improve heat management under the high-power conditions. In addition, current concentration in a specific portion may be prevented or reduced by controlling a current path. Also, the flexibility of the electrode may increase to prevent or reduce damage to the electrode due to external impacts or vibrations, thereby relatively enhancing the mechanical endurability of the battery.

Each of the first central substrate CS1 and the second central substrate CS2 may be arranged so that a line EL1 extending in a stacking direction Y of the stacked electrode assembly from the other end OEP1 of the first central substrate CS1 and a line EL2 extending in the stacking line Y of the stacked electrode assembly from the other end OEP2 of the second central substrate CS2 may be spaced apart from each other by a distance (e.g., a set or predetermined distance) (d1, d2). As the distance (e.g., a set or predetermined distance) (d1, d2) increases, a larger step height may occur on the top surface of the electrode assembly 100 when the stacked electrode assembly 100 is formed.

Referring to FIG. 11, the electrode assembly 100 may include a first area 1110, a second area 1120, and a third area 1130 in a stacking direction Y. The first area 1110 may include a first half-coating substrate H1, a second half-coating substrate H2 and a first central substrate CS1 of the first electrode 110, and a third half-coating substrate H3 and a fourth half-coating substrate H4 of the second electrode 120. The second area 1120 may include a first half-coating substrate H1 and a second half-coating substrate H2 of the first electrode 110, a third half-coating substrate H3 and a fourth half-coating substrate H4 of the second electrode 120. The third area 1130 may include a first half-coating substrate H1 and a second half-coating substrate H2 of the first electrode 110, and a third half-coating substrate H3, a second central substrate CS2, and a fourth half-coating substrate H4 of the second electrode 120. The thicknesses of the half-coating substrates (H1 to H4) may be substantially the same, and the thicknesses of the first central substrate CS1 and the second central substrate CS2 may be substantially the same. In this case, the thicknesses in the stacking direction Y of the first area 1110 and the third area 1130 may be substantially the same. However, the thickness in the stacking direction Y in the second area 1120 may be smaller than those in the first area 1110 and the third area 1130.

Referring to FIG. 12, the electrode assembly 100 may include a first area 1210, a second area 1220, and a third area 1230 in the stacking direction Y. The first area 1210 may include a first half-coating substrate H1, a second half-coating substrate H2, and a first central substrate CS1 of the first electrode 110, and a third half-coating substrate H3, and a fourth half-coating substrate H4 of the second electrode 120. The second area 1220 may include a first half-coating substrate H1, and a second half-coating substrate H2 of the first electrode 110, and a third half-coating substrate H3 and a fourth half-coating substrate H4 of the second electrode 120. Preferably, the second area 1220 may not include the first central substrate CS1 and the second central substrate CS2. The third area 1230 may include a first half-coating substrate H1, and a second half-coating substrate H2 of the first electrode 110, and a third half-coating substrate H3, a second central substrate CS2, and a fourth half-coating substrate H4 of the second electrode 120. The respective thicknesses of the half-coating substrates H1 to H4 may be substantially the same, and the respective thicknesses of the first central substrate CS1 and the second central substrate CS2 may be substantially the same. In this case, the respective thicknesses in the stacking direction Y in a first area 1210 and a third area 1230 may be substantially the same. However, the thickness stacked in the stacking direction Y in a second area 1220 may be smaller than that of the first area 1210 or the third area 1230.

Referring to FIG. 11 and FIG. 12, the step height between the thickness stacked in the stacking direction Y in the second area 1220 of FIG. 12 and the thickness in the first area 1210 or the third area 1230 and the distance (e.g., the set or predetermined distance) d2 may be greater than the step height between the thickness stacked in the stacking direction Y in the second area 1120 of FIG. 11 and the thickness of the first area 1110 or the third area 1130 and the distance (e.g., the set or predetermined distance) d1.

The first central substrate CS1 and the second central substrate CS2 may be arranged by appropriately adjusting a distance (e.g., a set or predetermined distance) between the line EL1 extending in the stacking direction Y of the stacked electrode assembly from the other end OEP1 of the first central substrate CS1 and the line EL2 extending in the stacking direction Y of the stacked electrode assembly from the other end OEP2 of the second central substrate CS2. Therefore, a variety of the electrode structures that effectively suffice the specifications of the secondary battery may be ensured in consideration of the effect caused by using the area without the central substrate.

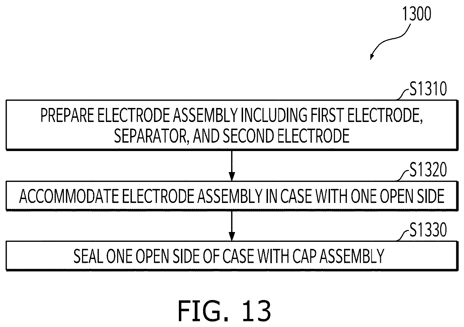

FIG. 13 is a flowchart showing aspects of a manufacturing method of a secondary battery according to some embodiments of the present disclosure. In the description of FIG 13, some redundant description from FIG. 1 to FIG. 12 may be omitted. Although FIG. 13 illustrates various operations in a method of manufacturing a secondary battery, embodiments according to the present disclosure are not limited thereto, and according to some embodiments the method may include additional operations, or fewer operations, or the order of operations may vary, unless otherwise stated or implied, without departing from the scope of embodiments according to the present disclosure.

A manufacturing method 1300 of a secondary battery according to some embodiments of the present disclosure may include preparing an electrode assembly including a first electrode, a separator, and a second electrode at step S1310, accommodating an electrode assembly in a case with one side open at step S1320 and sealing one open side of the case with a cap assembly at step S1330.

At step S1310, the electrode assembly may be formed by alternately stacking a first electrode, a separator, and a second electrode. Step S1310 may include forming the first electrode 110 and the second electrode 120.

A first electrode may include a first substrate having a first active material layer on one surface and a first non-coated part on the other surface, a second substrate having a first active material layer on one surface and a second non-coated part on the other surface, a first central substrate located between a portion of the other surface of the first substrate and a portion of the other surface of the second substrate, and a first substrate tab extending from one end of the first central substrate. A second electrode may include a third substrate having a second active material layer on one surface and a third non-coated part on the other surface, a fourth substrate having a second active material layer on one surface and a fourth non-coated part on the other surface, a second central substrate located between a portion of the other surface of the third substrate and a portion of the other surface of the fourth substrate, and a second substrate tab extending from one end of the second central substrate.

At step S1310, a sealing member may be placed on an electrode assembly. A first lead tab connected to the first electrode may be bent and placed on a first sealing member. Additionally, a second sealing member may be placed on the other side of the electrode assembly where the first sealing member is placed. The second electrode tab connected to the second electrode may be bent and placed on the second sealing member. The first sealing member may be compressed between the electrode assembly and the case by the pressure from the cap assembly to closely adhere the first lead tab to the case. The second sealing member may be compressed between the cap assembly and the electrode assembly by the pressure from the electrode assembly or the cap assembly to closely adhere the second lead tab to the cap assembly.

At step S1320, the electrode assembly may be accommodated in the case with one side open. The first lead tab may be placed between the electrode assembly and one inner side of the case. The case may be connected to the first lead tab. The case may be connected to the first electrode through the first lead tab to function as a negative electrode.

At step S 1330, one open side of the case may be sealed by the cap assembly and the second lead tab may be connected to the cap assembly. The cap assembly may be connected to the second electrode through the second lead tab to function as a positive electrode.

The secondary battery may include a sealing member between the electrode assembly and case and/or the electrode assembly and the cap assembly, thereby connecting the lead tabs, the case, and the cap assembly.

The secondary battery may include a sealing member having elasticity between the electrode assembly and case and/or the electrode assembly and the cap assembly, thereby preventing or reducing damage to internal components due to external impacts such as vibrations, drops, etc.

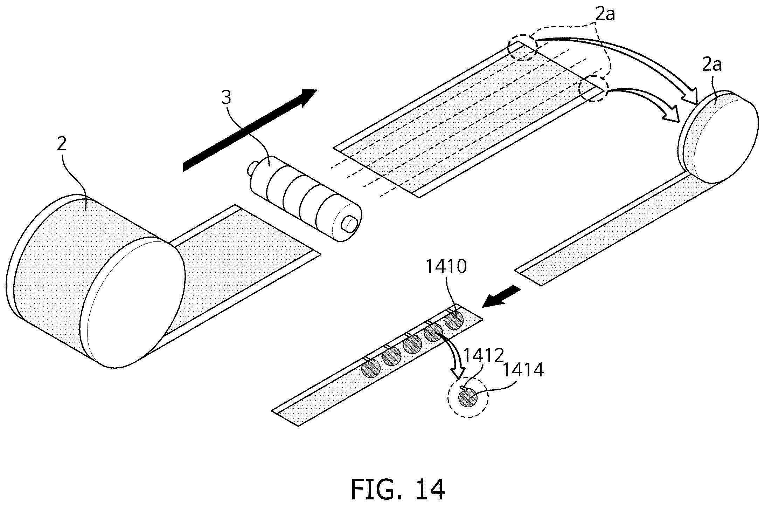

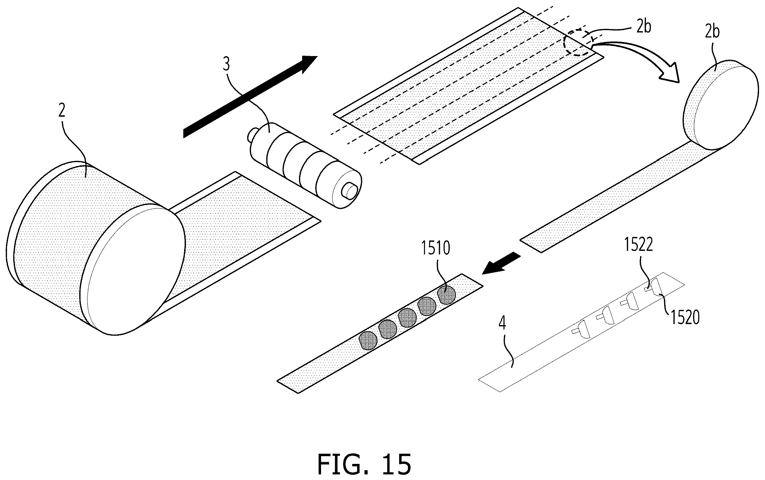

FIG. 14 is a view illustrated to explain a manufacturing process of a secondary battery according to a comparative example. FIG. 15 is a view illustrated to explain aspects of a manufacturing process of a secondary battery according to some embodiments of the present disclosure.

According to a comparative example, as shown in FIG. 14, in the process of manufacturing a stacked secondary battery among ultra-small secondary batteries, only a side electrode plate 2a may be used for the stacked secondary battery. Specifically, an electrode plate 2 may include a coated portion on which a negative electrode active material or a positive electrode active material is coated on a substrate, and a non-coated portion on which a negative electrode active material or a positive electrode active material is not coated. The substrate on which the positive electrode active material is coated may be formed of aluminum (Al), and the substrate on which the negative electrode active material is coated may be formed of copper (Cu). However, this is only an example, but embodiments according to the present disclosure are not limited thereto.

The coated electrode plate 2 may be cut by a slitting device 3 for manufacturing an ultra-small secondary battery. A non-coated part of the electrode plate 2 may be placed on the side electrode plate 2a. The ultra-small secondary battery according to a comparative example may include an electrode tab as a non-coated part and a coating part on a single electrode plate. Accordingly, only the side electrode plate 2a may be used for manufacturing an ultra-small and stacked secondary battery. It may be difficult to separately manufacture an electrode tab, which is a non-coated part, and a coating part because the secondary battery is ultra-small.

According to some embodiments, a punching process for manufacturing a positive electrode or a negative electrode may be performed on the side electrode plate 2a. A first electrode 1410 in a circular shape may be manufactured on a single side electrode plate 2a by a punching process. A first electrode tab 1412 of a non-coated part and a first coating layer 1414 of a coating part may be formed on the first electrode 1410. As described above, there is a problem in that the electrode plate 2 other than the side electrode plate 2a may not be used during the manufacturing process of an ultra small or stacked secondary battery according to a comparative example. In addition, as the secondary battery becomes smaller, the damage to the electrode plate 2 may increase. In addition, the first electrode tab 1412 and the first coating layer 1414 may be placed together on a single side electrode plate 2a, a cutting distance and a coating distance may be considered during a slitting process. Such process may be complex, which leads to the higher possibility of defects.

Referring to FIG. 15, an electrode of a secondary battery according to some embodiments of the present disclosure may be manufactured by using a central electrode plate 2b. The central electrode plate 2b may not include a non-coated part, and may be an electrode plate coated with a positive electrode active material or a negative electrode active material. According to some embodiments, a punching process for manufacturing a positive electrode or a negative electrode may be performed on the central electrode plate 2b. The central substrate 1520, the first electrode, the second electrode and the separator each may have a circular shape by a punching process. For example, a circular shaped first electrode may be manufactured in a single central electrode plate 2b by a punching process. The first electrode may be formed by coating a first coating layer 1510 on the entire area of the punched first electrode. A punching process may be performed on an electrode plate with a thin thickness without a coating layer. A first electrode tab 1522 may be manufactured by the punching process on the central substrate 1520, which is a non-coated part. The punched central substrate 1520 may have a circular shape (e.g. essentially half-circular shape) where the first electrode tab 1522 protrudes. However, the present disclosure is not limited thereto, but the central substrate may have various forms such as a square, an oval, etc.

As described above, according to some embodiments of the present disclosure, during the manufacturing process of an ultra-small or a stacked secondary battery, the damage to the electrode plate may be decreased, which may relatively improve the manufacturing efficiency of the secondary battery.

Manufacturing the first electrode or the second electrode, and the central substrate 1520 separately may simplify the manufacturing process of an ultra-small and stacked secondary battery, and there are no constraints on the size and shape of the electrode and the substrate.

Manufacturing the first electrode or the second electrode, and the central substrate 1520 separately may prevent or reduce wrinkle defects caused by a stress difference between a coating part and a non-coated part. The defects caused by the process of coating an electrode active material on a substrate may be decreased.

Although the present disclosure has been described above with respect to some embodiments thereof, the present disclosure is not limited thereto. Various modifications and variations can be made thereto by those skilled in the art within the equivalent scope of the appended claims.

### Description of Some of the Reference Symbols

1: Secondary Battery
100: Electrode Assembly
110: First Electrode
120: Second Electrode
130: Separator
142: Second Lead Tab
144: First Lead Tab
200: Case
300: Cap Assembly
400: Insulating Member
500: Sealing Member

## Claims

1. An electrode assembly (100), comprising:
a first electrode (110);
a second electrode (120); and a separator (130),
wherein the first electrode (110) comprises:
a first substrate (S1) including a first active material layer (AM1) on one surface and a first non-coated part (NC1) on the other surface;
a second substrate (S2) including a first active material layer (AM1) on one surface and a second non-coated part (NC2) on the other surface;
a first central substrate (CS1) between a portion of the first non-coated part (NC1) on the other surface of the first substrate (S1) and a portion of the second non-coated part (NC2) on the other surface of the second substrate (S2); and
a first substrate tab (ST1) extending from one end (EP1) of the first central substrate (CS1), and
wherein the second electrode (120) comprises:
a third substrate (S3) including a second active material layer (AM2) on one surface and a third non-coated part (NC3) on the other surface;
a fourth substrate (S4) including a second active material layer (AM2) on one surface and a fourth non-coated part (NC4) on the other surface;
a second central substrate (CS2) between a portion of the third non-coated part (NC3) on other surface of the third substrate (S3) and a portion of the fourth non-coated part (NC4) on other surface of the fourth substrate (S4); and
a second substrate tab (ST2) extending from one end (EP2) of the second central substrate (CS2).

2. The electrode assembly (100) as claimed in claim 1, wherein at least one of the first substrate tab (ST1) and the second substrate tab (ST2) further comprise an insulating part (IN) comprising a film consisting of an insulating material, and the film being coated on the first substrate tab (ST1) and/or the second substrate tab (ST2), respectively.

3. The electrode assembly (100) as claimed in claim 1 or 2, wherein a first direction where the first substrate tab (ST1) extends from one end of the first central substrate (CS1) and a second direction where the second substrate tab (ST2) extends from one end of the second central substrate (CS2) are different from each other.

4. The electrode assembly (100) as claimed in one of the preceding claims, wherein the electrode assembly (100) is a stacked electrode assembly (100), and
wherein the separator (130) is between a first active material layer (AM1) of the first electrode (110) and a second active material layer (AM2) of the second electrode (120).

5. The electrode assembly (100) as claimed in claim 4, wherein each of the first central substrate (CS1) and the second central substrate (CS2) is arranged to allow a line (EL1) extending in a stacking direction (Y) of the stacked electrode assembly (100) from the other end of the first central substrate (CS1), and a line (EL2) extending in the stacking direction (Y) from the other end of the second central substrate (CS2) to be spaced apart from each other by a predetermined distance (d1).

6. The electrode assembly (100) as claimed in one of the preceding claims, wherein each of the first substrate (S1), the second substrate (S2), the third substrate (S3), and the fourth substrate (S4) have a circular shape.

7. The electrode assembly (100) as claimed in one of the preceding claims, wherein each of the first central substrate (CS1) and the second central substrate (CS2) have one flat end (OEP1, OEP2) and the other flat end (EP1, EP2), and a longitudinal axis length of the one end (OEP1, OEP2) is greater than a longitudinal axis length of the other end (EP1, EP2).

8. The electrode assembly (100) as claimed in claim 7, wherein the first substrate tab (ST1) extends from the other flat end (EP1) of the first central substrate (CS1); and the second substrate tab (ST2) extends from the other flat end (EP2) of the second central substrate (CS2).

9. The electrode assembly (100) as claimed in one of the preceding claims, wherein the first central substrate (CS1) and the second central substrate (CS2) do not overlap.

10. The electrode assembly (100) as claimed in one of the preceding claims, wherein the first central substrate (CS1) and the second central substrate (CS2) each have a half-circular shape.

11. A secondary battery (1), comprising:
the electrode assembly (100) according to one of the preceding claims;
a case (200) configured to accommodate the electrode assembly (100), including an opening with one open side, and electrically connected to the first electrode (110); and
a cap assembly (300, 302) configured to seal the opening by coupling to the one open side of the case (200), and electrically connected to the second electrode (120).

12. The secondary battery (1) as claimed in claim 11, wherein the first electrode (110) is connected to a first lead tab (144), and
wherein a sealing member (502) is placed between the electrode assembly (100) and the first lead tab (144).

13. The secondary battery (1) as claimed in claim 12, wherein the first lead tab (144) is bent and arranged to be placed between a lower surface of the electrode assembly (100) and a bottom surface (210) of the case (200), and
wherein the sealing member (502) is arranged between the lower surface of the electrode assembly (100) and the bent first lead tab (144).

14. The secondary battery (1) as claimed in one of claims 12 or 13, wherein the sealing member (502) includes an elastic insulator and the sealing member (502) is configured to adhere the first lead tab (144) to an inner side of the case (200) by a pressure from the electrode assembly (100) in response to the cap assembly (300, 302) being coupled to the case (200).
